(19) **Europäisches Patentamt / European Patent Office / Office européen des brevets**

(11) **EP 3 111 091 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(21) Anmeldenummer: **15706244.9**

(22) Anmeldetag: **25.02.2015**

(51) Int Cl.:
*F16J 1/14* (2006.01)    *F16C 17/02* (2006.01)
*F16C 9/04* (2006.01)    *F04B 1/04* (2006.01)

(86) Internationale Anmeldenummer:
**PCT/EP2015/053904**

(87) Internationale Veröffentlichungsnummer:
**WO 2015/128362 (03.09.2015 Gazette 2015/35)**

(54) **GLEITLAGERSCHALE UND KOLBEN FÜR EINE RADIALKOLBENMASCHINE**

PLAIN BEARING SHELL AND PISTON FOR A RADIAL PISTON ENGINE

COQUILLE DE COUSSINET LISSE ET PISTON POUR MOTEUR À PISTONS RADIAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2014 DE 102014203571**

(43) Veröffentlichungstag der Anmeldung:
**04.01.2017 Patentblatt 2017/01**

(73) Patentinhaber: **KS Gleitlager GmbH**
**68789 St. Leon-Rot (DE)**

(72) Erfinder:
- **HEGER, Peter**
  **68789 St. Leon-Rot (DE)**
- **HAECKER, Stefan**
  **76698 Ubstadt-Weiher (DE)**
- **STADLER, Thorsten**
  **68789 St. Leon-Rot (DE)**
- **BAHM, Hermann**
  **76884 Oestringen (DE)**
- **CÉSAR, Nelly**
  **76698 Ubstadt-Weiher (DE)**

(74) Vertreter: **DREISS Patentanwälte PartG mbB**
**Friedrichstrasse 6**
**70174 Stuttgart (DE)**

(56) Entgegenhaltungen:
**WO-A1-2004/020853    DE-A1- 3 926 185**
**FR-A1- 2 566 485    US-A- 4 714 356**
**US-A1- 2007 081 748**

EP 3 111 091 B1

**Beschreibung**

Die Erfindung betrifft eine Gleitlagerschale mit im wesentlichen halbzylindrischer Geometrie für den Einsatz bei einem Kolben einer Radialkolbenmaschine zur Lagerung einer Rolle oder Welle, mit einer axialen Richtung, einer radialen Richtung und einer Umfangsrichtung der Gleitlagerschale, mit zwei in axialer Richtung voneinander abgewandten Stirnseiten, mit einer radial äußeren Seite und einer radial inneren der Rolle oder Welle zugewandten und diese in Umfangsrichtung gleitend aufnehmenden Seite.

Bei derartigen Gleitlagerschalen beziehungsweise bei derartigen Kolben für eine Radialkolbenmaschine stellt sich stets die Aufgabe, die Gleitlagerschale verliersicher, insbesondere verdrehsicher und im Wesentlichen in einem Festsitz am Kolben der Radialkolbenmaschine betriebssicher zu halten. Dies wurde seither dadurch realisiert, dass aus dem Kolbenmaterial im Bereich der Umfangsenden der Lagerschale ein Übergriff ausgebildet ist, gegen den die eingesetzte, insbesondere eingeklipste Lagerschale mit ihren Umfangsenden im Wesentlichen wenigstens nahezu anliegt, zum Beispiel wie gemäß WO 2007/113449 A1. Außerdem ist die Lagerschale häufig zusätzlich klemmschlüssig verstemmt, wofür Stanz- und/oder Pressvorgänge bei der am Kolben angeordneten Lagerschale ausgeführt werden müssen, was ebenfalls aufwendig ist und die Maßhaltigkeit der Lagerschale aber auch des Kolbens beeinträchtigen kann. Mit DE 10 2010 055 073 A1 der Anmelderin wurde auch der Vorschlag unterbreitet, die Gleitlagerschale radial außen mit dem metallischen Material des Kolbens zu verschweißen. Die US 2007/0081748 A1 zeigt eine Pleuellagerschale mit einem in die radiale Ebene abgewinkelten Vorsprung zum Halten eine Axialanlaufscheibe.

Der vorliegenden Erfindung liegt die Aufgabe zugrunde, eine weitere Möglichkeit zur betriebssicheren verdrehgesicherten Anordnung einer Gleitlagerschale bei einem Kolben einer Radialkolbenmaschine zu schaffen.

Diese Aufgabe wird bei einer Gleitlagerschale der genannten Art erfindungsgemäß dadurch gelöst, dass bei wenigstens einer Stirnseite ein in axialer Richtung der Gleitlagerschale vorstehender, jedoch nicht in die radiale Ebene abgewinkelter Vorsprung zur Ausbildung einer Verdrehsicherung der Gleitlagerschale bezüglich des Kolbens der Radialkolbenmaschine in Umfangsrichtung vorgesehen ist. Bei Anordnung einer erfindungsgemäß ausgebildeten Gleitlagerschale kann der Kolben derart komplementär zu dem axialen Vorsprung der Gleitlagerschale ausgebildet sein, dass er einen in Umfangsrichtung wirkenden Anschlag oder eine Anlagsfläche für den Vorsprung bildet, so dass die Gleitlagerschale in ihrer Umfangsrichtung nicht verdrehbar ist, wenn sie in ihrer bestimmungsgemäßen Montageposition in einer Lagersitzausnehmung des Kolbens angeordnet ist. Die erfindungsmäße Gleitlagerschale kann auf einer oder auf beiden Stirnseiten wenigstens einen solchen in axialer Richtung vorstehenden Vorsprung aufweisen. Sofern auf jeder Stirnseite ein Vorsprung vorgesehen ist können die Vorsprünge in Umfangsrichtung versetzt zueinander angeordnet sein, wodurch sich dann bei entsprechender Ausbildung des Kolbens auch eine korrekte Montageorientierung für die Gleitlagerschale sicherstellen lässt.

Die beiden Stirnseiten der Gleitlagerschale können beispielsweise von zueinander parallelen Stirnflächen der Gleitlagerschale gebildet sein, von denen der Vorsprung axial vorsteht. Es wäre zwar zumindest theoretisch denkbar, an den Bereich einer Stirnseite einer Gleitlagerschale einen axialen Vorsprung durch eine Schweiß- oder Lötverbindung anzufügen. Indessen wird aber eine Ausführung bevorzugt, bei dem der Vorsprung einstückig von Material, insbesondere Schichtverbundmaterial der Gleitlagerschale gebildet ist. Dabei kann es sich als vorteilhaft erweisen, wenn der Vorsprung radial innen und radial außen flächenbündig und stufenlos mit der radial inneren Seite und der radial äußeren Seite der Gleitlagerschale verläuft. Dies kann beispielsweise dadurch realisiert werden, dass die Gleitlagerschale aus einem ebenen Flachmaterial mitsamt dem Vorsprung konturiert und im Anschluss daran in einem Biege-Rollprozess auf ihre im wesentlichen halbzylindrische Geometrie gebracht wird.

Es wäre aber auch denkbar und in gewisser Hinsicht vorteilhaft wenn der Vorsprung einstückig von Material, insbesondere Schichtverbundmaterial der Gleitlagerschale gebildet ist, jedoch bezüglich der im wesentlichen halbzylindrischen Geometrie der Gleitlagerschale abweicht, indem der Vorsprung teilweise von der Gleitlagerschale abgeschert ist. Dies eröffnet die Möglichkeit, dass der Vorsprung von der im Wesentlichen halbzylindrischen Geometrie der Gleitlagerschale abgekoppelt wird. Der Vorsprung kann so an eine einfach herzustellende Geometrie des Kolbens, mit dem er ja zusammen wirken soll, angepasst werden. Insbesondere ist es dann möglich, dass der Vorsprung ebene und zueinander parallele Flankenflächen erhält.

In Realisierung dieses Erfindungsgedankens kann es sich als vorteilhaft erweisen, wenn der Vorsprung durch einen in Umfangsrichtung erstreckten Stanzschnitt teilweise von der Gleitlagerschale abgeschert ist. Weiter kann es sich als vorteilhaft erweisen, wenn der Vorsprung durch zwei in Umfangsrichtung erstreckte Stanzschnitte teilweise von der Gleitlagerschale abgeschert ist und über einen mittigen Anbindungsbereich an die Gleitlagerschale einstückig angebunden bleibt. Dabei erweist es sich als vorteilhaft, wenn der mittige Anbindungsbereich eine Umfangslänge von wenigstens der Wanddicke ($S_3$) der Gleitlagerschale aufweist.

Wie erwähnt kann es sich als vorteilhaft erweisen, wenn der Vorsprung in Umfangsrichtung voneinander abgewandte Seitenflanken aufweist, die zueinander parallele ebene Flankenflächen aufweisen.

Es kann sich aber auch als vorteilhaft erweisen, wenn der Vorsprung in Umfangsrichtung voneinander abgewandte Seitenflanken aufweist, die ebene Flankenflächen aufweisen, und dass die ebenen Flankenflächen in einer radialen Ebene der Gleitlagerschale orientiert sind und einen Winkel von 10° - 50° einschließen.

Nach einem weiteren besonders vorteilhaften Erfindungsgedanken wird vorgeschlagen, dass der Vorsprung in Umfangsrichtung voneinander abgewandte Seitenflanken aufweist, die über eine Materialfreischneidung in die Stirnfläche der betreffenden Stirnseite der Gleitlagerschale übergehen. Durch eine solche Freischneidung wird vermieden, dass ein hoher Aufwand für die Herstellung eines weitestgehend scharfen Übergangs zwischen den Seitenflanken und der betreffenden Stirnfläche der Gleitlagerschale aufgewandt werden muss. Sofern dieser Übergangsbereich frei geschnitten ist, kann die Lagersitzausnehmung quasi exakt an die Breite der Gleitlagerschale angepasst werden, so dass die Stirnflächen der Gleitlagerschale in axialer Richtung beidseits von Wandbereichen des Kolbens gestützt sind. Dennoch kann gleichzeitig der Vorsprung in Umfangsrichtung wenigstens nahezu spielfrei durch Anschlagsbereiche des Kolbens in Umfangsrichtung gestützt und daher gegen Verdrehen gesichert werden.

Es erweist sich als vorteilhaft und zweckmäßig, wenn der Vorsprung eine größte Umfangslänge (b) aufweist, die das 0,1 bis 0,4 - fache des Außendurchmessers der Gleitlagerschale beträgt.

Weiter erweist sich als vorteilhaft, wenn der Vorsprung wenigstens 2 mm über eine Stirnfläche der Gleitlagerschale in axialer Richtung vorsteht.

Weiter erweist sich von Vorteilhaft, wenn ein axialer Überstand des Vorsprungs über eine Stirnfläche der Gleitlagerschale der folgenden Formel genügt:

$$ l \leq \sqrt{\frac{D^2 + B^2}{4} - \frac{b^2}{4}} - \frac{B}{2} $$

wobei D den Lagerschalenaußendurchmesser, B die Lagerschalenbreite in axialer Richtung und b die größte Umfangslänge des Vorsprungs bezeichnet.

Es wird des weiteren Schutz beansprucht für einen Kolben für eine Radialkolbenmaschine mit den Merkmalen des Anspruchs 15 beziehungsweise 16.

Weitere Merkmale, Einzelheiten und Vorteile der Erfindung ergeben sich aus den Patentansprüchen und aus der zeichnerischen Darstellung und nachfolgenden Beschreibung bevorzugter Ausführungsformen der Erfindung. In der Zeichnung zeigt:

Figuren 1 bis 5 verschiedene perspektivische Ansichten von Ausführungsformen erfindungsgemäßer Gleitlagerschalen

Figur 6 eine perspektivische Ansicht auf einen schematisch dargestellten Kolben einer Radialkolbenmaschine mit einer in dessen Lagersitzausnehmung angeordneter erfindungsgemäßer Gleitlagerschale.

In den Figuren sind erfindungsgemäß ausgebildete Gleitlagerschalen durchgehend mit dem Bezugszeichen 2 bezeichnet. Die jeweilige Gleitlagerschale 2 umfasst jeweils eine axiale Richtung 4, eine radiale Richtung 6 und eine Umfangsrichtung 8. Sie umfasst zwei in axialer Richtung 4 voneinander abgewandte Stirnseiten 10, 12 sowie eine radial äußere Seite 14 und eine radial innere Seite 16. Erfindungsgemäß ist bei wenigstens einer Stirnseite 10, 12 und im jeweils bevorzugt dargestellten Fall auf jeder Stirnseite 10, 12 ein in axialer Richtung 4 erstreckter Vorsprung 18 ausgebildet. Der jeweilige Vorsprung 18 steht nur in axialer Richtung 4 über eine eine jeweilige Stirnseite 10, 12 bildende Stirnfläche 20, 22 vor. Bei allen Ausführungsformen ist der Vorsprung 18 einstückig aus Material oder Schichtverbundmaterial der Gleitlagerschale 2 gebildet. Zumindest in einem noch zu erläuternden Anbindungsbereich 24 geht der Vorsprung 18 vorzugsweise radial außen und radial innen stufenlos in die radial äußere beziehungsweise radial innere Seite 14, 16 der Gleitlagerschale 2 über.

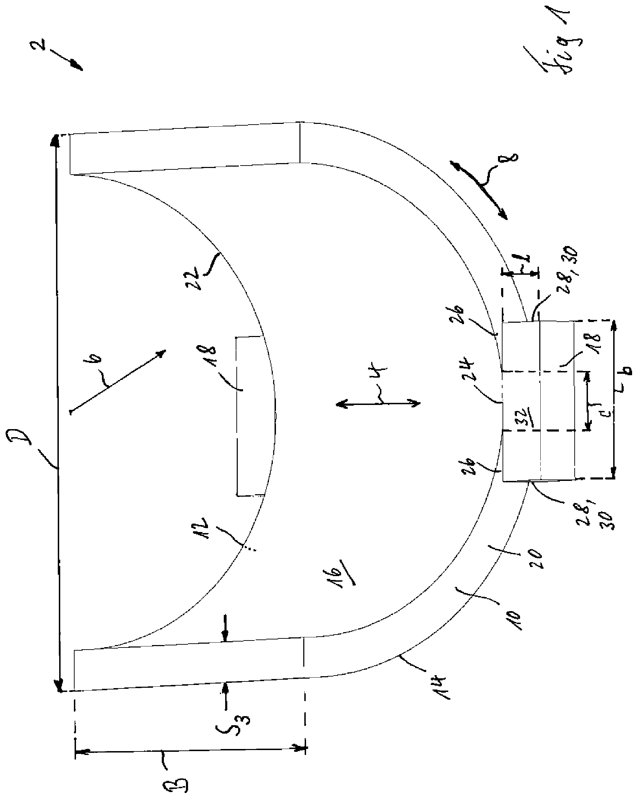

Im Ausführungsbeispiel der Figur 1 weicht der Vorsprung 18 von der im wesentlichen halbzylindrischen Geometrie der Gleitlagerschale 2 ab. Während die übrige Gleitlagerschale 2 in einem Biege-Rollprozess auf die im wesentlichen halbzylindrische Form gebracht wurde, wurde der Vorsprung 18 an Trennflächen 26 vom dann halbzylindrischen Teil der Gleitlagerschale 2 teilweise abgeschert. Auf diese Weise ist es möglich, dass der Vorsprung 18 beispielhaft eine im Wesentlichen quaderförmige Gestalt einnimmt, wie in Figur 1 dargestellt. Es ist auf diese Weise weiter möglich, dass der Vorsprung in Umfangsrichtung 8 voneinander abgewandte Seitenflanken 28 aufweist, die zueinander parallele ebene Flankenflächen 30 bilden. Die jeweilige Ebene der Flankenflächen 30 verläuft also nicht in einer radialen Ebene der Gleitlagerschale sondern orthogonal zum ursprünglichen Flachmaterial, also zu der inneren und äußeren Oberseite 32 des Vorsprungs 18.

Wenn die ebenen Flankenflächen 30 zueinander parallel sind, so lässt sich eine komplementär hierzu ausgebildete Ausnehmung bei einem Kolben für eine Radialkolbenmaschine einfacher ausbilden, beispielsweise ist es hierfür ausreichend, wenn in dem Kolbenmantel ein in Kolbenlängsrichtung erstreckter Schlitz ausgebildet wird, dessen Breite dem Abstand der Flankenflächen 30 voneinander entspricht.

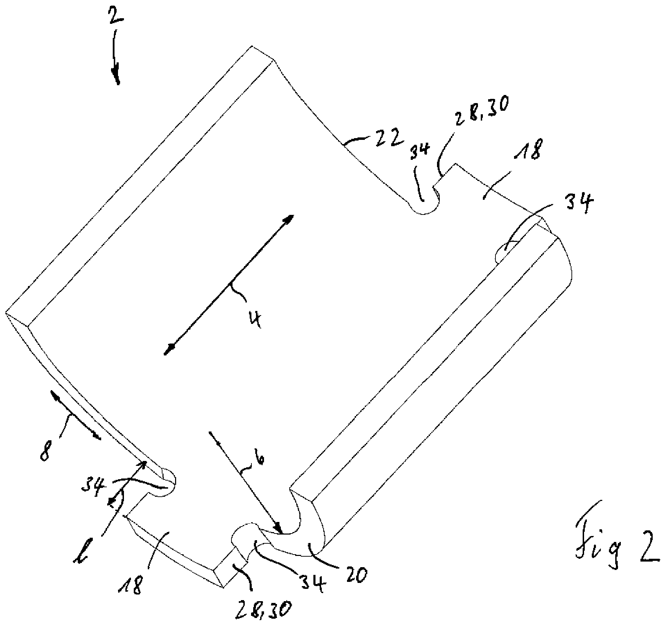

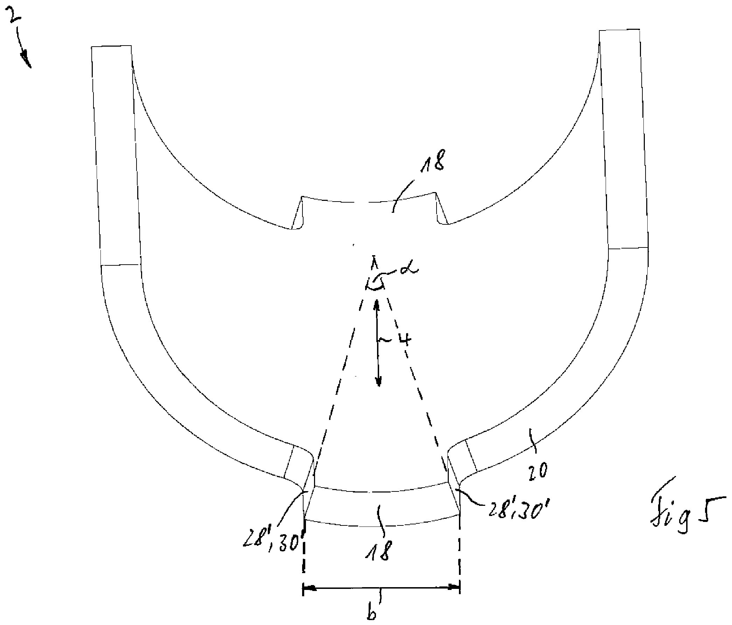

Der Anbindungsbereich 24 hat eine Erstreckung in Umfangsrichtung 8 (projiziert auf eine Ebene) von c, wobei c größer oder gleich der Wanddicke $S_3$ ist. Die größte Umfangserstreckung oder Breite des jeweiligen Vorsprungs 18 ist projiziert auf eine Ebene beispielhaft in Figuren 1 und 5 mit b bezeichnet. Die axiale Länge oder Tiefe des Vorsprungs 18 ist in Figuren 1 und 2 mit l bezeichnet.

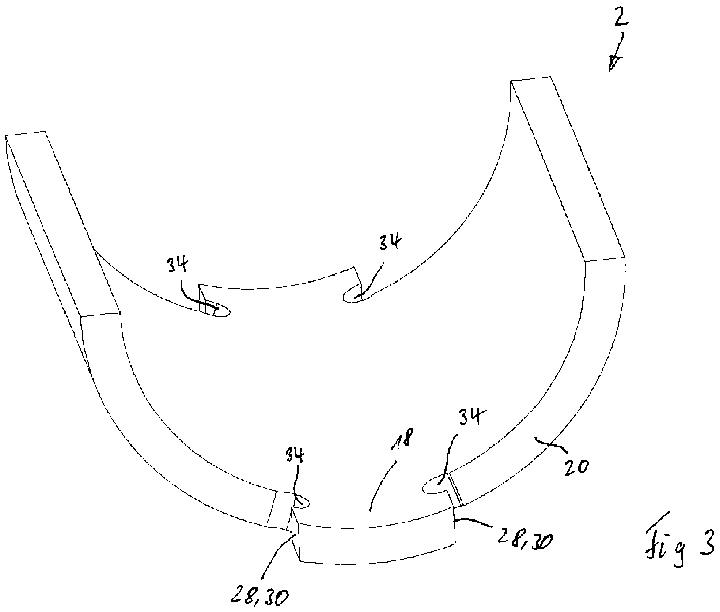

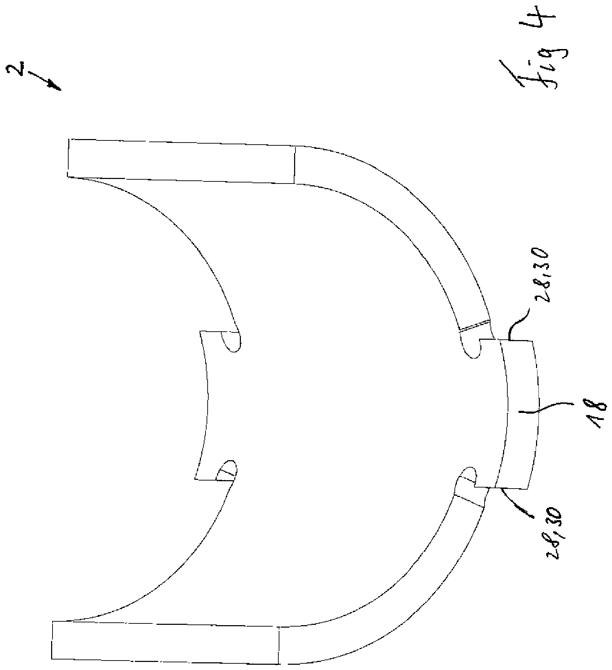

Die Figuren 2, 3 und 4 zeigen eine weitere Ausführungsform einer erfindungsgemäßen Gleitlagerschale 2. Bei dieser Gleitlagerschale 2 ist der Vorsprung 18 wie der zylindrische Teil der Gleitlagerschale auf im Wesentlichen halbzylindrische Geometrie gebracht. Dennoch sind die Seitenflanken 28 so bearbeitet, dass ihre ebenen Flankenflächen 30 zueinander parallel sind.

Im Übergang der Seitenflanken 28 zu den Stirnflächen 20, 22 der Gleitlagerschale 2 ist eine ungefähr in radialer Richtung 6 erstreckte Materialfreischneidung 34 jeweils vorgesehen. Dies macht es einfacher eine den Vorsprung 18 verdrehsicher haltende Aussparung bei dem Kolben auszubilden. Die Freischneidung 34 kann beispielsweise spanabhebend oder durch einen Stanzstich, insbesondere bei der Ausbildung des Vorsprungs 18, insbesondere durch Stanzen, hergestellt werden.

Schließlich zeigt Figur 5 eine erfindungsgemäße Gleitlagerschale 2 mit einem in axialer Richtung 4 über eine jeweilige Stirnfläche 20 vorstehenden Vorsprung 18. Die Seitenflanken 28' sind nicht parallel zueinander. Sie sind zwar durch ebene Flankenflächen 30' gebildet. Diese ebenen Flankenflächen 30' schließen jedoch einen spitzen Winkel $\alpha$.

Die jeweilige Freischneidung 34 der Gleitlagerschalen weist zumindest abschnittsweise einen Krümmungsradius R im Bereich des 0,5 bis 2,5-fachen der Wanddicke $S_3$ der Lagerschale auf.

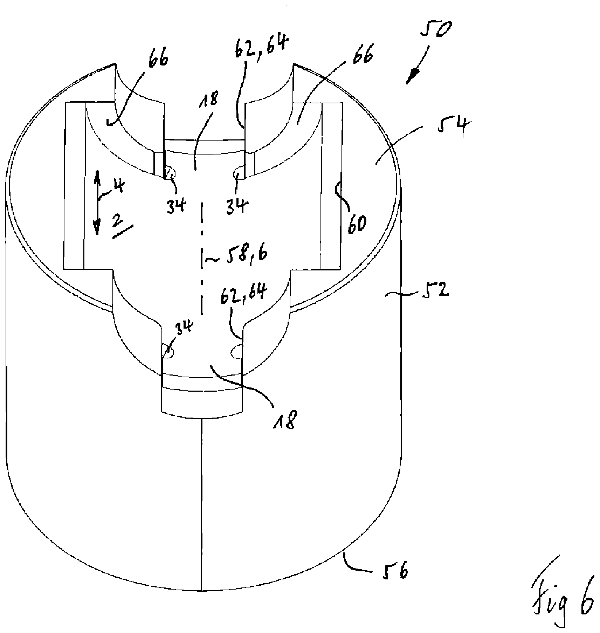

Schließlich zeigt Figur 6 einen Kolben 50 für eine Radialkolbenmaschine. Der Kolben umfasst einen Kolbenmantel 52 und zwei axiale Enden 54, 56 und eine Kolbenlängsachse 58. Am einen Ende 54 des Kolbens ist eine insgesamt mit dem Bezugszeichen 60 bezeichnete halbzylindrische Lagersitzausnehmung vorgesehen. In diese Lagersitzausnehmung 60 ist eine erfindungsgemäße Gleitlagerschale 2 eingesetzt, und zwar derart, dass die Kolbenlängsachse 58 durch einen mittigen Scheitel der Gleitlagerschale 2 in radialer Richtung 6 der Gleitlagerschale 2 verläuft. Man erkennt, dass die beispielhaft beidseitigen Vorsprünge 18 in schlitzförmige Ausnehmungen 62 eingreifen, die im Kolbenmantel 52 in Richtung der Kolbenlängsachse 58 erstreckt sind. Diese schlitzförmigen Ausnehmungen 62 sind begrenzt von beispielhaft ebenen Wandabschnitten 64, die wenigstens im Wesentlichen nahezu gegen die Seitenflanken 28 des jeweiligen Vorsprungs anliegen und somit eine Verdrehsicherung für die Gleitlagerschale 2 in Umfangsrichtung bilden.

Des Weiteren ist der Kolben 50 beispielhaft so ausgebildet, dass die Gleitlagerschale in axialer Richtung 4 von seitlichen Wangen 66 des Kolbens lagedefiniert und im Wesentlichen spielfrei gehalten ist. Es wäre aber auch denkbar, dass diese seitlichen Wangen 66 in radialer Richtung 6 nicht über die innere Seite der Gleitlagerschale vorstehen, so dass auch die Lagerung einer Welle denkbar wäre.

In an sich bekannter Weise nimmt die Gleitlagerschale 2 eine nicht dargestellte Rolle auf, die in einer Radialkolbenmaschine gegen eine radial äußere Nockenbahn abrollbar ist, wobei der Kolben in dessen radialer Anordnung hin und her bewegt wird. Es sei jedoch erwähnt, dass bei Radialkolbenmaschinen die Antriebsrichtung grundsätzlich umgekehrt werden kann.

**Patentansprüche**

1. Gleitlagerschale (2) mit im wesentlichen halbzylindrischer Geometrie für den Einsatz bei einem Kolben (50) einer Radialkolbenmaschine zur Lagerung einer Rolle oder Welle, mit einer axialen Richtung (4), einer radialen Richtung (6) und einer Umfangsrichtung (8) der Gleitlagerschale, mit zwei in axialer Richtung (4) voneinander abgewandten Stirnseiten (10, 12), mit einer radial äußeren Seite (14) und einer radial inneren der Rolle oder Welle zugewandten und diese in Umfangsrichtung (8) gleitend aufnehmenden Seite (16), **dadurch gekennzeichnet, dass** bei wenigstens einer Stirnseite (10, 12) ein in axialer Richtung (4) der Gleitlagerschale vorstehender, jedoch nicht in die radiale Ebene abgewinkelter Vorsprung (18) zur Ausbildung einer Verdrehsicherung der Gleitlagerschale (2) bezüglich des Kolbens (50) der Radialkolbenmaschine in Umfangsrichtung (8) vorgesehen ist.

2. Gleitlagerschale nach Anspruch 1, **dadurch gekennzeichnet, dass** die beiden Stirnseiten (10, 12) von zueinander parallelen Stirnflächen (20, 22) der Gleitlagerschale gebildet sind, von denen der Vorsprung (18) axial vorsteht.

3. Gleitlagerschale nach Anspruch 1 oder 2, **dadurch gekennzeichnet, dass** der Vorsprung (18) einstückig von Material, insbesondere Schichtverbundmaterial der Gleitlagerschale gebildet ist.

4. Gleitlagerschale nach Anspruch 1, 2 oder 3, **dadurch gekennzeichnet, dass** der Vorsprung (18) radial innen und radial außen flächenbündig und stufenlos mit der radial inneren Seite (16) und der radial äußeren Seite (14) der Gleitlagerschale verläuft.

5. Gleitlagerschale nach einem oder mehreren der vorstehenden Ansprüche, **dadurch gekennzeichnet, dass** der Vorsprung (18) einstückig von Material, insbesondere Schichtverbundmaterial der Gleitlagerschale gebildet ist, jedoch bezüglich der im wesentlichen halbzylindrischen Geometrie der Gleitlagerschale abweicht, indem der Vorsprung (18) teilweise von der Gleitlagerschale abgeschert ist.

6. Gleitlagerschale nach einem oder mehreren der vorstehenden Ansprüche, **dadurch gekennzeichnet, dass** der Vorsprung (18) durch einen in Umfangsrichtung erstreckten Stanzschnitt teilweise von der Gleitlagerschale abgeschert ist.

7. Gleitlagerschale nach Anspruch 6, **dadurch gekennzeichnet, dass** der Vorsprung (18) durch zwei in Umfangsrichtung erstreckte Stanzschnitte teilweise von der Gleitlagerschale abgeschert ist und über einen mittigen Anbindungsbereich (24) an die Gleitlagerschale einstückig angebunden bleibt.

**8.** Gleitlagerschale nach Anspruch 6 oder 7, **dadurch gekennzeichnet, dass** der insbesondere mittige Anbindungsbereich (24) eine Umfangslänge von wenigstens der Wanddicke ($S_3$) der Gleitlagerschale aufweist.

**9.** Gleitlagerschale nach einem oder mehreren der vorstehenden Ansprüche, **dadurch gekennzeichnet, dass** der Vorsprung (18) in Umfangsrichtung (8) voneinander abgewandte Seitenflanken (28) aufweist, die zueinander parallele und vorzugsweise ebene Flankenflächen (30) aufweisen.

**10.** Gleitlagerschale nach einem oder mehreren der vorstehenden Ansprüche 1-8, **dadurch gekennzeichnet, dass** der Vorsprung (18) in Umfangsrichtung (8) voneinander abgewandte Seitenflanken (28) aufweist, die vorzugsweise ebene Flankenflächen (30) aufweisen, und dass die vorzugsweise ebenen Flankenflächen (30) in einer radialen Ebene der Gleitlagerschale orientiert sind und einen Winkel von 10° - 50° einschließen.

**11.** Gleitlagerschale nach einem oder mehreren der vorstehenden Ansprüche, **dadurch gekennzeichnet, dass** der Vorsprung (18) in Umfangsrichtung (8) voneinander abgewandte Seitenflanken (28) aufweist, die über eine Materialfreischneidung in die Stirnfläche (20, 22) der betreffenden Stirnseite (10, 12) der Gleitlagerschale übergehen.

**12.** Gleitlagerschale nach einem oder mehreren der vorstehenden Ansprüche, **dadurch gekennzeichnet, dass** der Vorsprung (18) eine größte Umfangslänge (b) aufweist, die das 0,1 bis 0,4 - fache des Außendurchmessers (D) der Gleitlagerschale beträgt.

**13.** Gleitlagerschale nach einem oder mehreren der vorstehenden Ansprüche, **dadurch gekennzeichnet, dass** der Vorsprung (18) wenigstens 2 mm über eine Stirnfläche (20, 22) der Gleitlagerschale in axialer Richtung (4) vorsteht.

**14.** Gleitlagerschale nach einem oder mehreren der vorstehenden Ansprüche, **dadurch gekennzeichnet, dass** ein axialer Überstand (l) des Vorsprungs (8) über eine Stirnfläche (20, 22) der Gleitlagerschale der folgenden Formel genügt:

$$l \leq \sqrt{\frac{D^2 + B^2}{4} - \frac{b^2}{4}} - \frac{B}{2}$$

wobei D den Lagerschalenaußendurchmesser, B die Lagerschalenbreite in axialer Richtung und b die größte Umfangslänge des Vorsprungs (18) bezeichnet.

**15.** Kolben (50) für eine Radialkolbenmaschine, mit einer in Bewegungsrichtung des Kolbens im Betrieb erstreckten Kolbenlängsachse (58), mit zwei axialen Enden (54, 56) und einem Kolbenmantel (52), mit einer am einen Ende (54) in einer Lagersitzausnehmung (60) angeordneten ungefähr halbzylindrischen metallischen Gleitlagerschale (2) nach einem oder mehreren der vorstehenden Ansprüche zur drehbaren Aufnahme einer Rolle oder Welle, wobei die axiale Richtung (4) der Gleitagerschale (2) und der Rolle oder Welle orthogonal zur Kolbenlängsachse (58) verläuft, wobei der Kolben Bereiche (64) aufweist, die in Umfangsrichtung (8) der Gleitlagerschale (2) eine Verdrehsicherung bilden, indem sie einen in Umfangsrichtung (8) wirkenden Anschlag für den Vorsprung (18) bilden und durch eine in Richtung der Kolbenlängsachse (58) erstreckte Ausnehmung (62) im Kolbenmantel (52) gebildet sind.

## Claims

**1.** A plain bearing shell (2) with a substantially semicylindrical geometry for use in a piston (50) of a radial piston engine for the purposes of mounting a roller or shaft, having an axial direction (4), a radial direction (6), and a circumferential direction (8) of the plain bearing shell, having two face sides (10, 12) that face away from one another in the axial direction (4), having a radially outer side (14) and having a radially inner side (16) which faces the roller or shaft and receives said roller or shaft such that it can slide in the circumferential direction (8), **characterized in that** on at least one face side (10, 12), a projection (18) that protrudes in the axial direction (4) of the plain bearing shell, but is not bent into the radial plane is provided to form an anti-rotation element in the circumferential direction (8) of the plain bearing shell (2) with respect of the piston (50) of the radial piston engine.

**2.** The plain bearing shell according to claim 1, **characterized in that** the two face sides (10, 12) are formed by end surfaces (20, 22) of the plain bearing shell which are parallel to one another and from which the projection (18) protrudes axially.

**3.** The plain bearing shell according to claim 1 or 2, **characterized in that** the projection (18) is formed integrally from material, in particular composite layer material of the plain bearing shell.

**4.** The plain bearing shell according to claim 1, 2, or 3, **characterized in that** the projection (18) extends flush radially to the inside and radially to the outside without a step to the radially inner side (16) and the radially outer side (14) of the plain bearing shell.

5. The plain bearing shell according to one or more of the preceding claims, **characterized in that** the projection (18) is formed integrally from material, in particular composite layer material of the plain bearing shell, although deviating from the substantially semicylindrical geometry of the plain bearing shell **in that** the projection (18) is partially sheared off of the plain bearing shell.

6. The plain bearing shell according to one or more of the preceding claims, **characterized in that** the projection (18) is partially sheared off of the plain bearing shell by a die cut extending in the circumferential direction.

7. The plain bearing shell according to claim 6, **characterized in that** the projection (18) is partially sheared off of the plain bearing shell by two die cuts extending in the circumferential direction, and remains integrally connected to the plain bearing shell via a central connecting region (24).

8. The plain bearing shell according to claim 6 or 7, **characterized in that** the in particular central connecting region (24) has a circumferential length of at least the wall thickness ($S_3$) of the plain bearing shell.

9. The plain bearing shell according to one or more of the preceding claims, **characterized in that** the projection (18) has side edges (28) that face away from one another in the circumferential direction (8) and have side surfaces (30) that are parallel to one another and preferably flat.

10. The plain bearing shell according to one or more of the preceding claims 1-8, **characterized in that** the projection (18) has side edges (28) that face away from one another in the circumferential direction (8) which preferably have flat side surfaces (30), and the preferably flat side surfaces (30) are oriented in a radial plane of the plain bearing shell and enclose an angle of 10°-50°.

11. The plain bearing shell according to one or more of the preceding claims, **characterized in that** the projection (18) has side edges (28) which face away from one another in the circumferential direction (8) and transition via a material notch into the end surface (20, 22) of the relevant face side (10, 12) of the plain bearing shell.

12. The plain bearing shell according to one or more of the preceding claims, **characterized in that** the projection (18) has a maximum circumferential length (b) that is 0.1 to 0.4 times the outer diameter (D) of the plain bearing shell.

13. The plain bearing shell according to one or more of the preceding claims, **characterized in that** the projection (18) protrudes at least 2 mm beyond an end surface (20, 22) of the plain bearing shell in the axial direction (4).

14. The plain bearing shell according to one or more of the preceding claims, **characterized in that** an axial overhang (l) of the projection (8) over an end surface (20, 22) of the plain bearing shell satisfies the following formula:

$$l \le \sqrt{\frac{D^2 + B^2}{4} - \frac{b^2}{4}} - \frac{B}{2}$$

where D designates the bearing shell outer diameter, B designates the bearing shell width in the axial direction, and b designates the maximum circumferential length of the projection (18).

15. A piston (50) for a radial piston engine having a longitudinal piston axis (58) extending in the direction of movement of the piston during operation, having two axial ends (54, 56) and a piston skirt (52), having an approximately semicylindrical metal plain bearing shell (2) according to one or more of the preceding claims, which is arranged at an end (54) in a bearing seat recess (60), for rotatably receiving a roller or shaft, wherein the axial direction (4) of the plain bearing shell (2) and the roller or shaft extend orthogonally to the longitudinal piston axis (58), wherein the piston has regions (64) that form an anti-rotation element in the circumferential direction (8) of the plain bearing shell (2) in that they form a stop acting in the circumferential direction (8) for the projection (18) and in that the regions (64) are formed by a recess (62) in the piston skirt (52) extending in the direction of the longitudinal piston axis (58).

**Revendications**

1. Coquille de coussinet lisse (2) ayant une géométrie sensiblement semi-cylindrique destinée à être utilisée dans un piston (50) d'une machine à piston radial pour supporter un rouleau ou un arbre, ayant une direction axiale (4), une direction radiale (6) et une direction circonférentielle (8) de la coquille de coussinet lisse, ayant deux côtés frontaux (10, 12) opposés l'un à l'autre dans la direction axiale (4), ayant un côté extérieur radial (14) et un côté intérieur radial (16) faisant face au rouleau ou à l'arbre et admettant le coulissement de celui-ci dans la direction circonférentielle (8), **caractérisée en ce qu'**au moins une saillie (18) est prévue, dépassant d'un côté frontal (10, 12) dans la direction axiale (4) de la coquille de coussinet lisse, mais cependant pas inclinée dans le plan radial, pour empêcher une rotation de la coquille de coussinet lisse (2) par rapport au piston (50) de la machine à piston radial dans la direction circonférentielle (8).

2. Coquille de coussinet lisse selon la revendication 1, **caractérisée en ce que** les deux côtés frontaux (10, 12) sont formés de côtés frontaux parallèles (20, 22) de la coquille de palier lisse, d'où la saillie (18) fait saillie axialement.

3. Coquille de coussinet lisse selon la revendication 1 ou 2, **caractérisée en ce que** la saillie (18) est formée d'un seul tenant à partir du matériau de la coquille de palier lisse, en particulier un matériau composite stratifié.

4. Coquille de coussinet lisse selon la revendication 1, 2 ou 3, **caractérisée en ce que** la saillie (18) s'étend radialement vers l'intérieur et radialement vers l'extérieur affleurante et en continu par rapport au côté intérieur radial (16) et au côté extérieur radial (14) de la coquille de coussinet lisse.

5. Coquille de coussinet lisse selon une ou plusieurs des revendications précédentes, **caractérisée en ce que** la saillie (18) est formée d'un seul tenant à partir du matériau de la coquille de palier lisse, en particulier un matériau composite stratifié, mais diffère cependant de la géométrie sensiblement semi-cylindrique de la coquille de coussinet lisse où la saillie (18) est partiellement séparée de la coquille de coussinet lisse.

6. Coquille de coussinet lisse selon une ou plusieurs des revendications précédentes, **caractérisée en ce que** la saillie (18) est partiellement séparée de la coquille de coussinet lisse par une entaille de découpage s'étendant dans la direction circonférentielle.

7. Coquille de coussinet lisse selon la revendication 6, **caractérisée en ce que** la saillie (18) est partiellement séparée de la coquille de coussinet lisse par deux entailles de découpage s'étendant dans la direction circonférentielle, et reste reliée, par l'intermédiaire une zone de liaison centrale (24), d'un seul tenant avec la coquille de coussinet lisse.

8. Coquille de coussinet lisse selon la revendication 6 ou 7, **caractérisée en ce que** la zone de liaison centrale (24) présente en particulier une longueur circonférentielle d'au moins l'épaisseur de paroi ($S_3$) de la coquille de coussinet lisse.

9. Coquille de coussinet lisse selon une ou plusieurs des revendications précédentes, **caractérisée en ce que** la saillie (18) présente des flancs latéraux (28) opposés l'un à l'autre dans la direction circonférentielle (8), qui présentent des surfaces de flanc (30) mutuellement parallèles et de préférence planes.

10. Coquille de coussinet lisse selon une ou plusieurs des revendications 1 à 8, **caractérisée en ce que** la saillie (18) présente des flancs latéraux (28) opposés l'un à l'autre dans la direction circonférentielle (8), qui présentent des surfaces de flanc (30) de préférence planes, et **en ce que** les surfaces de flanc (30) de préférence planes sont orientées dans un plan radial de la coquille de coussinet lisse et englobent un angle de 10° à 50°.

11. Coquille de coussinet lisse selon une ou plusieurs des revendications précédentes, **caractérisée en ce que** la saillie (18) présente des flancs latéraux (28) opposés l'un à l'autre dans la direction circonférentielle (8), qui passent au-dessus d'une incision exempte de matériau dans la surface frontale (20, 22) du côté frontal concerné (10, 12) de la coquille de coussinet lisse.

12. Coquille de coussinet lisse selon une ou plusieurs des revendications précédentes, **caractérisée en ce que** la saillie (18) a une longueur circonférentielle maximale (b) qui est de 0,1 à 0,4 fois le diamètre extérieur (D) de la coquille de coussinet lisse.

13. Coquille de coussinet lisse selon une ou plusieurs des revendications précédentes, **caractérisée en ce que** la saillie (18) dépasse d'au moins 2 mm d'une surface frontale (20, 22) de la coquille de coussinet lisse dans la direction axiale (4).

14. Coquille de coussinet lisse selon une ou plusieurs des revendications précédentes, **caractérisée en ce qu'**un dépassement axial (l) de la saillie (8) depuis une surface frontale (20, 22) de la coquille de coussinet lisse répond à la formule suivante:

$$l \leq \sqrt{\frac{D^2 + B^2}{4} - \frac{b^2}{4}} - \frac{B}{2}$$

où D est le diamètre extérieur de coquille de coussinet lisse, B est la largeur de coquille de coussinet dans la direction axiale et b est la plus grande longueur circonférentielle de la saillie (18).

15. Piston (50) pour une machine à piston radial, ayant un axe longitudinal de piston (58) s'étendant dans la direction de déplacement du piston en fonctionnement, ayant deux extrémités axiales (54, 56) et une jupe de piston (52), ayant une coquille de coussinet lisse métallique (2) sensiblement semi-cylindrique agencée au niveau d'une extrémité (54) dans un évidement de réception de coussinet (60) selon une ou plusieurs des revendications précédentes pour recevoir en rotation un rouleau ou arbre, dans lequel la direction axiale (4) de la coquille de coussinet lisse (2) et du rouleau ou de l'arbre s'étend orthogonale à l'axe longitudinal de piston (58), dans lequel le piston comporte des zones (64) qui empêchent une rotation dans la direction circonférentielle (8) de la coquille de coussinet lisse (2), qui forment une butée d'arrêt pour la saillie (18) dans la direction circonférentielle (8), et qui sont formées par un évidement (62) s'étendant dans la direction de l'axe longitudinal de piston (58).

Fig 1

EP 3 111 091 B1

Fig 2

2

4

34

34

34

34

18

20

28,30

28,30

Fig 3

Fig. 4

Fig 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007113449 A1
- DE 102010055073 A1
- US 20070081748 A1